# EUROPEAN PATENT APPLICATION

(11) **EP 4 814 568 A1**
(43) Date of publication of application: **30.09.2026**
(21) Application number: 26166768.7
(22) Date of filing: 23.03.2026
(51) Int. Cl.: G02B 27/01

(54) **HOLOGRAPHIC WINDSHIELD DISPLAY AND CONTROL METHOD THEREOF**

(30) Priority: 24.03.2025 KR 20250037524; 14.10.2025 KR 20250147733
(71) Applicant: Hyundai Mobis Co., Ltd., Gangnam-gu Seoul 06141 (KR)
(72) Inventor: SHIN, Min Ho, 06141 Seoul (KR)
(74) Representative: Vossius & Partner Patentanwälte Rechtsanwälte mbB

(57) **Abstract**

A holographic windshield display system and a control method thereof are provided. The holographic windshield display system includes a windshield on which a holographic optical element (HOE) is laminated, a projection module to project an image onto the HOE, and a controller to control the projection module. The projection module includes at least one light source module including light sources having different central wavelengths, and a monitoring device to monitor changes in at least one characteristic among temperature and wavelength of the at least one light source module. The controller drives a light source whose central wavelength matches a central wavelength of a diffraction wavelength of the HOE among the light sources having different central wavelengths, based on the changed characteristic of at least one light source module.

## Description

### TECHNICAL FIELD

The present specification relates to a holographic windshield display system and a control method thereof, and more specifically, to a holographic windshield display system including a projection module capable of maintaining a central wavelength regardless of a temperature change, and a control method thereof.

### BACKGROUND

A holographic head-up display (HUD) includes a holographic optical element (HOE).

In the case of a vehicle HUD, the HOE is included in a windshield and includes a pre-formed interference pattern that selectively responds to light incident at a specific angle and having a specific wavelength from the HUD, thereby causing diffraction of a desired shape.

The interference pattern may be formed so that the HOE satisfies a Bragg matching condition for the incident light, enabling high-efficiency diffraction of light under specific conditions.

The HOE is an optical element that uses the diffraction characteristics of light, and has an advantage of providing a large-area screen to a driver while reducing the size of a HUD system.

On the other hand, since the HOE is sensitive to the wavelength of incident light, laser light sources are primarily used in the holographic HUDs.

Since the HOE is a diffractive optical element and is sensitive to the wavelength of incident light, even when a path of the incident light is the same, a change in wavelength result in different diffraction angles.

As a result, the image appears to move from the driver's viewpoint. In addition, each red (R), green (G), and blue (B) laser exhibits different wavelength variations even with the same temperature change.

Accordingly, diffraction angles in the HOE change, causing color separation in the image.

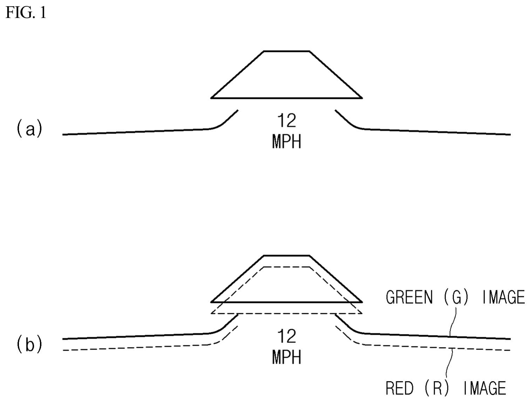

FIG. 1 illustrates an example of color separation of an image generated by a laser projector-based holographic HUD using a R+G laser diode according to the related art.

It can be seen that, in an input image (image from the laser projector) illustrated in FIG. 1A, R and G images are displayed identically, preventing color separation, but in an output image (image projected onto the HOE) illustrated in FIG. 1B, the R image is displayed displaced below the G image, resulting in color separation.

Meanwhile, research has recently been conducted to incorporate holographic windshield display systems into vehicles.

The holographic windshield display system generally includes a projection module and an HOE, and the HOE, which serves as a transparent screen, is laminated onto the vehicle windshield in the form of a film.

Accordingly, the image projected from the projection module is projected onto the HOE and diffracted toward a passenger's eyes.

In order to improve the efficiency of the holographic windshield display system, it is preferable to match the central wavelength of the wavelength of the projection module with the central wavelength of the diffraction wavelength of the HOE.

However, as described above, since all light sources have a central wavelength that varies depending on temperature, the efficiency of the holographic windshield display system varies depending on temperature.

Accordingly, when efficiencies differ for each R, G, and B, white balance may be disrupted, color reproduction may be altered, and brightness of an image formed on the HOE can be reduced.

### SUMMARY

The present disclosure is directed to at least solve the above problems.

The present disclosure is also directed to providing a holographic windshield display system including a projection module capable of maintaining a central wavelength regardless of a temperature change.

The present disclosure is also directed to providing a control method of a holographic windshield display system capable of maintaining a central wavelength of a projection module included in the holographic windshield display system regardless of a temperature change.

In a general aspect, a holographic windshield display system includes: a windshield on which a holographic optical element (HOE) is laminated; a projection module configured to project an image onto the HOE; and a controller configured to control the projection module, wherein the projection module includes: at least one light source module including a plurality of light sources having different central wavelengths; and a monitoring device configured to monitor changes in at least one characteristic among temperature and wavelength of the at least one light source module, and wherein the controller is further configured to drive a light source whose central wavelength matches a central wavelength of a diffraction wavelength of the HOE among the plurality of light sources having different central wavelengths, based on the changed characteristic of the at least one light source module.

The holographic windshield display system may further include a memory configured to store a driving light source table according to the changed characteristic of the at least one light source module.

The plurality of different light sources may have differences between the central wavelengths within a range of 2 nm to 10 nm.

The at least one light source module may include a red (R) laser light source module, a green (G) laser light source module, and a blue (B) laser light source module.

The projection module may further include: a display panel; an illumination optical system configured to transmit light from the at least one light source module to the display panel; and a projection optical system configured to supply an image generated on the display panel to the HOE.

The at least one light source module may include a red (R) laser light source module, a green (G) laser light source module, and a blue (B) laser light source module.

The projection module may further include: a display panel; an illumination optical system configured to transmit light from the at least one light source module to the display panel; and a projection optical system configured to supply an image generated on the display panel to the HOE.

The at least one light source module may include a red (R) laser light source module, a green (G) laser light source module, and a blue (B) laser light source module.

In another general aspect, a control method of a holographic windshield display system including a windshield on which a holographic optical element (HOE) is laminated, a projection module which includes at least one light source module including a plurality of light sources having different central wavelengths and a monitoring device, includes: monitoring, by the monitoring device, changes in at least one characteristic among temperature and wavelength of the at least one light source module; projecting, by the projection module, an image onto the HOE; controlling, by a controller, the projection module; and driving, by the controller, a light source whose central wavelength matches a central wavelength of a diffraction wavelength of the HOE among the plurality of light sources having different central wavelengths, based on the changed characteristics of the at least one light source module.

The control method may further include providing a memory configured to store a driving light source table according to the changed characteristics of the at least one light source module.

The plurality of different light sources may have differences between the central wavelengths within a range of 2 nm to 10 nm.

The at least one light source module may include a red (R) laser light source module, a green (G) laser light source module, and a blue (B) laser light source module.

The projection module may include: a display panel; an illumination optical system configured to transmit light from the at least one light source module to the display panel; and a projection optical system configured to supply an image generated on the display panel to the HOE.

In the holographic windshield display system and the control method thereof according to various embodiments of the present disclosure, when changes in the characteristic of the light source module is detected, the light source whose central wavelength matches the central wavelength of the diffraction wavelength of the HOE is driven, and the driving of the light source having changed characteristic can be terminated.

Accordingly, since the light source configured in the memory is automatically driven according to the changes in the characteristic of the light source module, a decrease in brightness and a change in color of the holographic windshield display due to the changes in the characteristic of the light source module can be effectively prevented.

The effects obtainable from the present disclosure are not limited to the above effects, and other effects that are not described will be able to be clearly understood by those skilled in the art to which the present disclosure pertains based on the following description.

### BRIEF DESCRIPTION OF THE DRAWINGS

The accompanying drawings, which are included as part of the detailed description to help understanding of the present disclosure, provide various embodiments of the present disclosure and describe the contents of the present disclosure together with the detailed description, in which:
FIG. 1 is a view illustrating an example of a holographic image display (HID) image in which color separation occurs due to a change in the wavelength of a light source when two color lasers are used and a temperature change occurs in a typical HID;
FIG. 2 is a view illustrating the configuration of a holographic windshield display system according to an embodiment of the present disclosure;
FIG. 3 is a view illustrating an example of a process of manufacturing a holographic windshield display included in the holographic windshield display system according to the embodiment of the present disclosure;
FIG. 4 is a view illustrating a detailed configuration of a blue (B) laser light source module illustrated in FIG. 2;
FIG. 5 is an example illustrating a state in which the holographic windshield display system according to the embodiment of the present disclosure is installed in a vehicle; and
FIG. 6 is another example illustrating a state in which the holographic windshield display system according to the embodiment of the present disclosure is installed in the vehicle.

### DETAILED DESCRIPTION

Hereinafter, various embodiments disclosed in the present disclosure will be described in detail with reference to the accompanying drawings, and the same or similar components are denoted by the same reference numerals regardless of the drawing symbols, and overlapping descriptions thereof will be omitted.

The suffixes "module" and "unit" for components used in the following description are given or used interchangeably in consideration of ease of preparing the specification and not have meanings or roles that are distinct from each other by themselves.

In addition, in describing various embodiments disclosed in the present disclosure, when it is determined that a detailed description of a related known technology may obscure the gist of various embodiments disclosed in the present disclosure, the detailed descriptions thereof will be omitted.

In addition, the accompanying drawings are only for easy understanding of various embodiments disclosed in the present disclosure, and it should be understood that the technical spirit disclosed in the present disclosure is not limited by the accompanying drawings, and all changes, equivalents, or substitutes included in the spirit and technical scope of the present disclosure are included in the accompanying drawings.

Terms including ordinal numbers such as first or second may be used to describe various components, but the components are not limited by the terms. The terms are used only for the purpose of distinguishing one component from another.

When a certain component is described as being "connected" or "coupled" to the other component, it should be understood that the certain component may be directly connected or directly coupled to the other component, but another component may be present therebetween.

On the other hand, when a certain component is described as being "directly connected" or "directly coupled" to the other component, it should be understood that another component is not present therebetween.

The singular includes the plural unless the context clearly dictates otherwise.

In the application, it should be understood that terms "include" and "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Hereinafter, various embodiments of the present disclosure will be described with reference to the accompanying drawings.

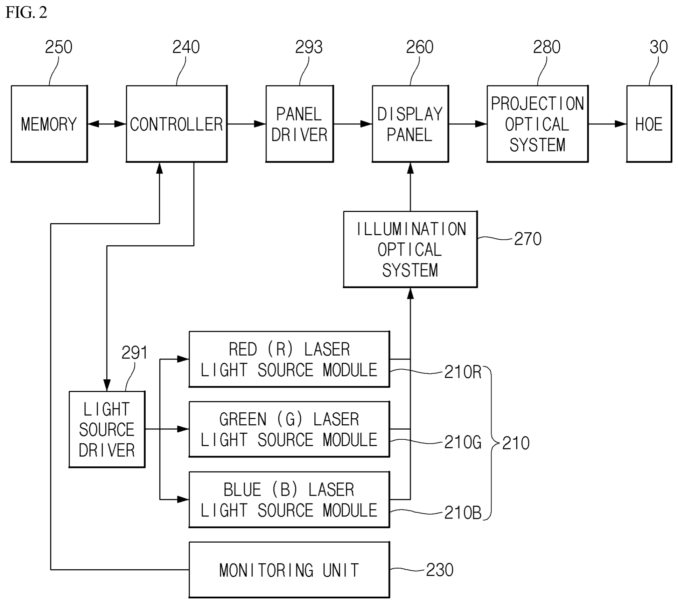

FIG. 2 is a view illustrating the configuration of a holographic windshield display system according to an embodiment of the present disclosure.

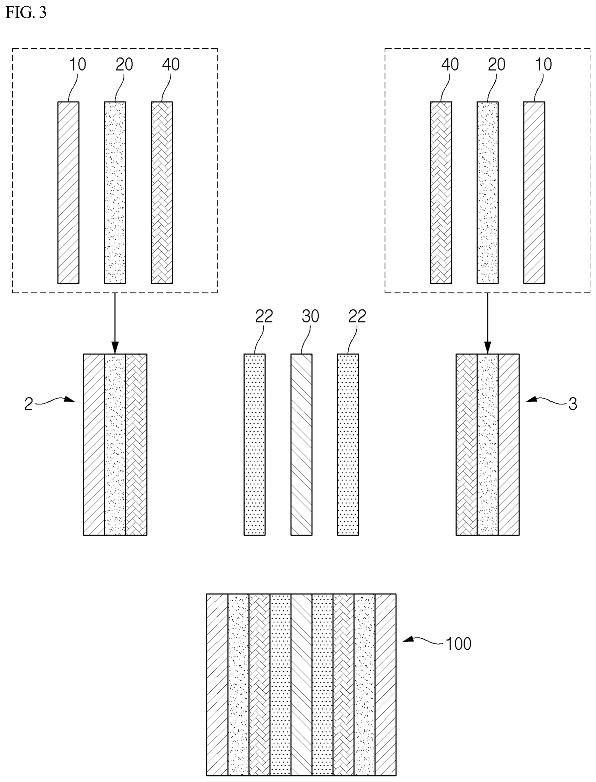

FIG. 3 is a view illustrating an example of a process of manufacturing a holographic windshield display included in the holographic windshield display system according to the embodiment of the present disclosure.

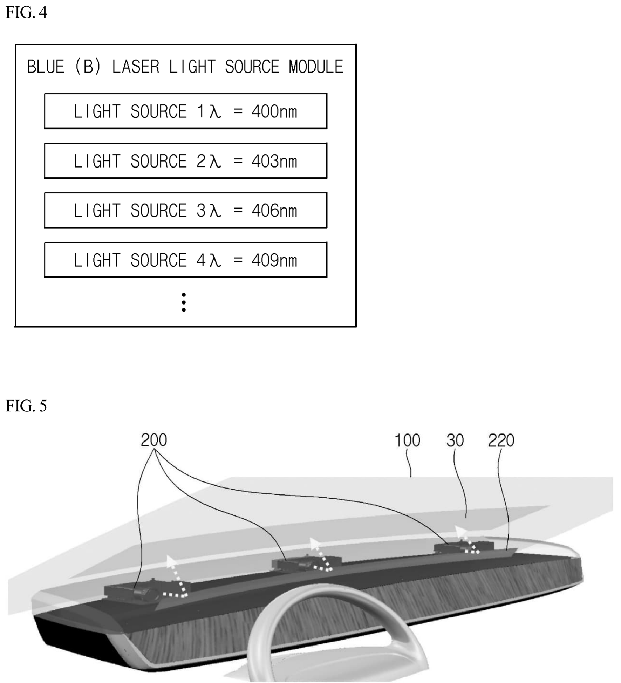

FIG. 4 is a view illustrating a detailed configuration of a blue (B) laser light source module illustrated in FIG. 2.

FIG. 5 is an example illustrating a state in which the holographic windshield display system according to the embodiment of the present disclosure is installed in a vehicle.

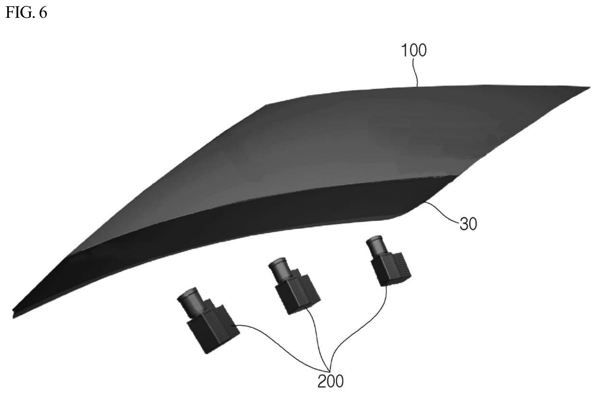

FIG. 6 is another example illustrating a state in which the holographic windshield display system according to the embodiment of the present disclosure is installed in the vehicle.

First, as illustrated in FIG. 2, a holographic windshield display system according to an embodiment of the present disclosure includes a windshield 100 in which a holographic optical element (HOE) 30 is laminated in a film form, a projection module 200 for projecting an image onto the HOE 30, and a controller 240 for controlling the projection module 200.

First, an example of a process of manufacturing the windshield 100 on which the HOE 30 is laminated will be described with reference to FIG. 3.

First, a first bonding process of manufacturing first assemblies 2 and 3 by sequentially laminating glass 10, a polyvinyl butyral film (PVB) film 20, a first barrier film 40, a second barrier film 40, the PVB film 20, and the glass 10 and bonding the laminate at a first bonding temperature (e.g., 150 °C or higher) and high pressure is performed.

Subsequently, a separation process of separating the first barrier film 40 from the second barrier film 40 to separate the first assemblies 2 and 3 into first bonded glass and second bonded glass is performed.

Subsequently, a second bonding process of arranging two low-temperature bonding films 22 between the first barrier film 40 of the first bonded glass and the second barrier film 40 of the second bonded glass, arranging the film-shaped HOE 30 between the two low-temperature bonding films 22, and then bonding the laminate at a second bonding temperature (e.g., in the range of 50 °C to 100 °C) lower than the first bonding temperature is performed.

The first bonding process and the second bonding process may be performed using an autoclave, and the film-shaped HOE 30 may be manufactured by roll-to-roll imprinting.

The first bonding process may be performed after a preliminary bonding process is first performed at a temperature lower than the first bonding temperature, and the second bonding process may be performed after the preliminary bonding process is first performed at a temperature lower than the second bonding temperature.

The low-temperature bonding film may be formed of a material capable of performing the bonding process at a lower temperature than the PVB film 20.

Materials for the low-temperature bonding film 22 may include an ethylene-vinyl acetate (EVA) film, a thermosetting polymer, a photocurable polymer, etc.

The HOE 30 may include a pre-formed interference pattern that selectively responds to light incident at a specific angle and having a specific wavelength, thereby causing diffraction of a desired shape.

In the present disclosure, the projection module 200 for projecting an image onto the HOE 30 is configured such that at least one light source module 210 includes a plurality of light sources (light source 1, light source 2, light source 3, light source 4, etc.) having different central wavelengths.

FIGS. 5 and 6 illustrate an example in which three projection modules 200 are installed inside a vehicle.

The holographic windshield display system may further include a reflective mirror 220, as illustrated in FIG. 5, as needed.

Hereinafter, an example in which three projection modules 200 are provided will be described, but the number of projection modules 200 installed inside the vehicle is not limited.

Each projection module 200 includes at least one light source module 210 as described above.

FIG. 2 illustrates each projection module 200 having three light source modules 210R, 210G, and 210B.

Hereinafter, an example in which each projection module 200 includes three light source modules 210R, 210G, and 210B will be described, but the number of light source modules 210 installed inside each projection module 200 is not limited.

Each projection module 200 includes a red (R) laser light source module 210R, a green (G) laser light source module 210G, and a blue (B) laser light source module 210B.

In addition, each of the light source modules 210R, 210G, and 210B includes a plurality of light sources (light source 1, light source 2, light source 3, light source 4, etc.) having different central wavelengths.

FIG. 4 illustrates an example in which the blue (B) laser light source module 210B includes the plurality of light sources (light source 1, light source 2, light source 3, light source 4, etc.).

The plurality of light sources (light source 1, light source 2, light source 3, light source 4, etc.) provided in each of the light source modules 210R, 210G, and 210B may have central wavelengths that differ from each other by a constant difference within a range of 2 nm to 10 nm.

FIG. 4 illustrates that differences between the central wavelengths of the plurality of light sources (light source 1, light source 2, light source 3, light source 4, etc.) are 3 nm.

Referring to FIG. 4, light source 1 has a central wavelength of 400 nm, light source 2 has a central wavelength of 403 nm, light source 3 has a central wavelength of 406 nm, and light source 4 has a central wavelength of 409 nm.

The projection module 200 includes a monitoring unit 230 (e.g., a monitoring device) for monitoring changes in at least one characteristic among temperature and wavelength of at least one light source module 210.

In addition, the holographic windshield display system includes the controller 240 for driving a light source whose central wavelength matches the central wavelength of the diffraction wavelength of the HOE 30 among the plurality of light sources (light source 1, light source 2, light source 3, light source 4, etc.) having different central wavelengths based on the changed characteristic of the at least one light source module 210.

The controller 240 may be provided in the projection module 200.

In addition, the holographic windshield display system may further include a memory 250 for storing a driving light source table according to the changed characteristic of the at least one light source module.

The memory 250 may be provided in the projection module 200.

FIG. 2 illustrates that the memory 250 and the controller 240 are separate elements, but this is not limiting, and the memory 250 may be included as a portion of the controller 240.

The projection module 200 may further include a display panel 260, an illumination optical system 270 for transmitting light from the at least one light source module 210 to the display panel 260, and a projection optical system 280 for supplying an image generated by the display panel 260 to the HOE 30.

The display panel 260 is not particularly limited, but may be one of a digital light processing (DLP), a micro-electro-mechanical systems (MEMS), a scanner, a liquid crystal on silicon, and a liquid crystal display (LCD).

In addition, the projection module 200 may further include a light source driver 291 for driving the light source module 210 and a panel driver 293 for driving the display panel 260.

In a holographic windshield display system having this configuration, when changes in the characteristic of the light source module 210, for example, changes in temperature and/or wavelength, are detected by the monitoring unit 230, the controller 240 that receives a signal from the monitoring unit 230 may transmit a driving signal to the light source driver 291 to drive a light source to be newly driven according to the changed characteristic of the light source module 210 from a driving light source table stored in the memory 250.

Accordingly, a light source having a central wavelength matching the central wavelength of the diffraction wavelength of the HOE 30 may be newly driven, and the driving of the light source having changed characteristic may be stopped.

It will be apparent to those skilled in the art that the present disclosure may be embodied in other specific forms without departing from the essential characteristics of the present disclosure. Accordingly, the above detailed description should not be construed in any way as limiting but rather as illustrative. The scope of the present disclosure should be determined by a reasonable construction of the appended claims, and all changes within the scope of equivalents in the present disclosure are intended to be included in the present disclosure.

## Claims

1. A holographic windshield display system comprising:
a windshield on which a holographic optical element (HOE) is laminated;
a projection module configured to project an image onto the HOE; and
a controller configured to control the projection module,
wherein the projection module includes:
at least one light source module including a plurality of light sources having different central wavelengths; and
a monitoring device configured to monitor changes in at least one characteristic among temperature and wavelength of the at least one light source module, and
wherein the controller is further configured drive a light source whose central wavelength matches a central wavelength of a diffraction wavelength of the HOE among the plurality of light sources having different central wavelengths, based on the changed characteristic of the at least one light source module.

2. The holographic windshield display system of claim 1, further comprising a memory configured to store a driving light source table according to the changed characteristic of the at least one light source module.

3. The holographic windshield display system of claim 2, wherein the plurality of different light sources have differences between the central wavelengths within a range of 2 nm to 10 nm.

4. The holographic windshield display system of any one of claims 1 to 3, wherein the at least one light source module includes a red (R) laser light source module, a green (G) laser light source module, and a blue (B) laser light source module.

5. The holographic windshield display system of claim 4, wherein the projection module further includes:
a display panel;
an illumination optical system configured to transmit light from the at least one light source module to the display panel; and
a projection optical system configured to supply an image generated on the display panel to the HOE.

6. A control method of a holographic windshield display system including a windshield on which a holographic optical element (HOE) is laminated, a projection module which includes at least one light source module including a plurality of light sources having different central wavelengths and a monitoring device, the control method comprising:
monitoring, by the monitoring device, changes in at least one characteristic among temperature and wavelength of the at least one light source module;
projecting, by the projection module, an image onto the HOE;
controlling, by a controller, the projection module, and
driving, by the controller, a light source whose central wavelength matches a central wavelength of a diffraction wavelength of the HOE among the plurality of light sources having different central wavelengths, based on the changed characteristics of the at least one light source module.

7. The control method of claim 6, further comprising:
providing a memory configured to store a driving light source table according to the changed characteristics of the at least one light source module.

8. The control method of claim 7, wherein the plurality of different light sources have differences between the central wavelengths within a range of 2 nm to 10 nm.

9. The control method of any one of claims 6 to 8, wherein the at least one light source module includes a red (R) laser light source module, a green (G) laser light source module, and a blue (B) laser light source module.

10. The control method of claim 9, wherein the projection module further includes:
a display panel;
an illumination optical system configured to transmit light from the at least one light source module to the display panel; and
a projection optical system configured to supply an image generated on the display panel to the HOE.
